# EUROPÄISCHE PATENTSCHRIFT

(11) **EP 2 054 683 B1**
(45) Veröffentlichungstag und Bekanntmachung des Hinweises auf die Patenterteilung: **12.10.2016**
(21) Anmeldenummer: 07788314.8
(22) Anmeldetag: 08.08.2007
(51) Int. Cl.: F25D 17/04

(54) **ELEKTRISCHER KÜHLSCHRANK MIT VAKUUM-FRISCHHALTESYSTEM SOWIE ENTSPRECHENDES KONTROLLVERFAHREN**
ELECTRICAL REFRIGERATOR WITH VACUUM PRESERVING SYSTEM AND CORRESPONDING CONTROL METHOD
RÉFRIGÉRATEUR ÉLECTRIQUE À SYSTÈME DE CONSERVATION SOUS VIDE ET PROCÉDÉ DE CONTRÔLE CORRESPONDANT

(30) Priorität: 18.08.2006 CN 200610041376
(43) Veröffentlichungstag der Anmeldung: 06.05.2009
(73) Patentinhaber: BSH Hausgeräte GmbH, 81739 München (DE)
(72) Erfinder: FENG, Junhong, Anhui Province 239000 (CN); SUAN, Zongquan, Jiangsu 210046 (CN); ZHOU, Xiaotian, 85521 Ottobrunn (DE)
(86) Internationale Anmeldenummer: PCT/EP2007/058236
(87) Internationale Veröffentlichungsnummer: WO 2008/019979

(56) Entgegenhaltungen:
- EP-A1- 1 591 735
- WO-A-2004/036129
- DE-U1-202005 004 130
- DE-U1-202005 020 035
- FR-A- 2 320 030
- JP-A- 2004 121 156
- JP-A- 2004 251 599
- US-A- 6 090 422
- US-A1- 2002 083 724

## Beschreibung

Elektrischer Kühlschrank mit Vakuum-Frischhaltesystem sowie entsprechendes Kontrollverfahren

### Technisches Gebiet:

Die vorliegende Erfindung betrifft einen elektrischen Kühlschrank mit Vakuum-Frischhaltesystem sowie ein Verfahren zur Kontrolle des betreffenden elektrischen Kühlschranks.

### Allgemeiner Stand der Technik:

Es ist allgemein bekannt, dass Lebensmittel durch kühle Aufbewahrung beziehungsweise durch Aufbewahrung bei Temperaturen unter dem Gefrierpunkt über einen längeren Zeitraum aufbewahrt werden können. Die Aufbewahrungsdauer der Lebensmittel hängt hierbei nicht nur von der Temperatur und der Feuchtigkeit der betreffenden Umgebung ab, sondern unterliegt beispielsweise auch dem Einfluss des Sauerstoffgehaltes der Umgebungsluft und der Bakterienkonzentration der Umgebungsluft. Um eine Verlängerung der Aufbewahrungsdauer der Lebensmittel zu erreichen, ist man bestrebt, eine Aufbewahrungsumgebung für Lebensmittel mit niedrigem Sauerstoffgehalt und niedrigem Bakteriengehalt zu schaffen - beispielsweise Vakuum-Frischhaltebehälter.

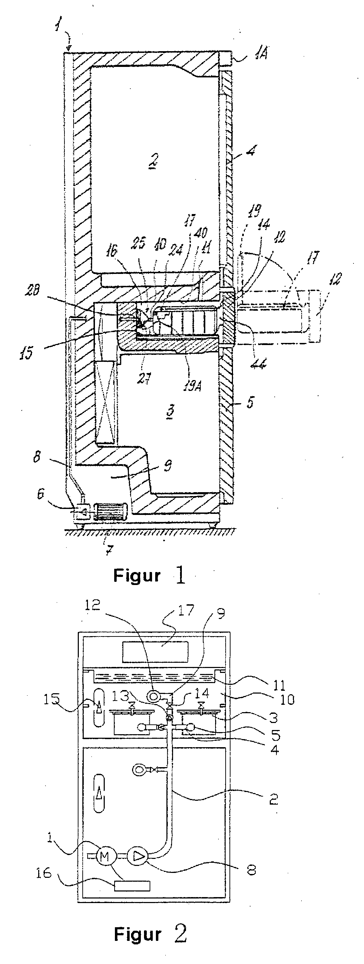

In dem europäischen Patent EP0405680A2 wird ein Vakuum-Frischhaltebehälter in der Kühlaufbewahrungskammer eines elektrischen Kühlschrankes vorgeschlagen. Der vorstehend bezeichnete Vakuum-Frischhaltebehälter ist in Abbildung 1 dargestellt. Dieser Vakuum-Frischhaltebehälter weist einen Behälterkörper 17 und eine mit dem Behälterkörper verbundene Behälterabdeckung 19 auf, welche geöffnet werden kann.

An der hinteren Seite des Behälterkörpers wird eine Saugdüse 25 vorgesehen, wobei die vorstehend bezeichnete Saugdüse zu einem an der hinteren Wand der Kühlaufbewahrungskammer des elektrischen Kühlschrankes befindlichen Anschluss 27 passt. Wenn die Tür 12 des elektrischen Kühlschrankes geschlossen wird und die Vakuumpumpe in Betrieb gesetzt wird, werden die vorstehend bezeichnete Saugdüse und der vorstehend bezeichnete Anschluss dicht aneinandergesaugt und in dem Vakuum-Frischhaltebehälter wird auf diese Weise ein Vakuum aufgebaut. Wenn die Tür 12 des elektrischen Kühlschrankes geöffnet wird, verlässt die Saugdüse 25 den Anschluss 27, da die Tür 12 des elektrischen Kühlschrankes und der Behälterkörper 18 miteinander verbunden sind. Der Vakuum-Frischhaltebehälter wird durch Saugdüse 25 automatisch mit Luft gefüllt. Die Mangelhaftigkeit der vorstehend bezeichneten technischen Konzeption besteht darin, dass beim Öffnen der Tür 12 des elektrischen Kühlschrankes der Vakuum-Frischhaltebehälter unweigerlich mit Luft gefüllt wird, so dass dem Benutzer keine andere Wahlmöglichkeit verbleibt. Wenn der Benutzer lediglich die Tür des elektrischen Kühlschrankes öffnen will - ohne den Vakuum-Frischhaltebehälter mit Luft füllen zu wollen - so kann dies durch die vorstehend bezeichnete technische Konzeption nicht erreicht werden.

In dem chinesischen Patent ZL03245813.4 wird ein Vakuum-Frischhaltebehälter in der Kühlaufbewahrungskammer eines elektrischen Kühlschrankes vorgeschlagen. Der vorstehend bezeichnete Vakuum-Frischhaltebehälter ist in Abbildung 2 dargestellt. Hierbei sind Vakuum-Frischhaltebehälter und Tür des elektrischen Kühlschrankes unabhängig voneinander konzipiert, so dass die vorstehend bezeichnete Mangelhaftigkeit des europäischen Patentes EP0405680A2 überwunden wurde. Die Mangelhaftigkeit des vorstehend bezeichneten chinesischen Patentes besteht allerdings darin, dass das Kugelventil zur Luftbefüllung des Vakuum-Frischhaltebehälters an der Abdeckung befestigt wird. Wenn der Benutzer den Vakuum-Frischhaltebehälter öffnen will, muss der Benutzer zunächst das Kugelventil drehen, um den Druck außen und innen des Vakuum-Frischhaltebehälters auszugleichen. Erst danach kann die Abdeckung geöffnet werden. Somit sind für das Öffnen des Vakuum-Frischhaltebehälters zwei Bedienungsschritte erforderlich, so dass diese technische Konzeption nicht besonders vorteilhaft ist. Außerdem werden bei dem vorstehend bezeichneten Vakuum-Frischhaltesystem zwei Vakuum-Frischhaltebehälter vorgesehen, welche mit verschiedenen Abzweigungen der Vakuum-Aufbauleitung verbunden sind. Weil keine spezielle Kontrollvorrichtung zum Öffnen und Schließen der Vakuum-Aufbauleitung vorgesehen wird, besteht bei dem elektrischen Kühlschrank keine Möglichkeit zum unabhängigen Vakuumaufbau von nur einer der beiden Vakuum-Frischhaltebehälter.

Wenn es zu nicht ordnungsgemäßen Betriebszuständen des Vakuum-Frischhaltesystems kommt, so besteht bei der gegenwärtig vorhandenen Konzeption keine Möglichkeit zur unverzüglichen Reflektion solcher nicht ordnungsgemäßer Betriebszustände.

Ein elektrischer Kühlschrank gemäß dem Oberbegriff von Anspruch 1 ist aus EP1591735 bekannt.

### Inhalt der Erfindung:

Die Zielsetzung der vorliegenden Erfindung besteht in der Bereitstellung eines elektrischen Kühlschranks mit Vakuum-Frischhaltesystem, wobei der vorstehend bezeichnete elektrische Kühlschrank eine relativ lange Aufbewahrung von Lebensmitteln gestattet und einfach zu bedienen ist.

Eine weitere Zielsetzung der vorliegenden Erfindung besteht in der Bereitstellung eines Verfahrens zur Kontrolle des elektrischen Kühlschranks mit vorstehend bezeichnetem Vakuum-Frischhaltesystem.

Um die vorstehend bezeichneten Zielsetzungen zu verwirklichen, sieht eine praktische Ausführungsform der vorliegenden Erfindung einen elektrischen Kühlschrank mit Vakuum-Frischhaltesystem gemäß Anspruch 1 vor.

Eine praktische Ausführungsform der vorliegenden Erfindung sieht ein Kontrollverfahren für einen elektrischen Kühlschrank mit Vakuum-Frischhaltesystem gemäß Anspruch 7 vor.

Die Vorteile des erfindungsgemäßen elektrischen Kühlschrankes sind nachstehend aufgeführt:
1. Das in dem erfindungsgemäßen elektrischen Kühlschrank vorgesehene Vakuum-Frischhaltesystem verlängert die Lagerungsdauer der Lebensmittel.
2. Das Kontrollverfahren für das Vakuum-Frischhaltesystem des elektrischen Kühlschranks reflektiert tatsächlich den Betriebszustand der Vakuum-Aufbauvorrichtung.

### Erläuterung der Figuren:

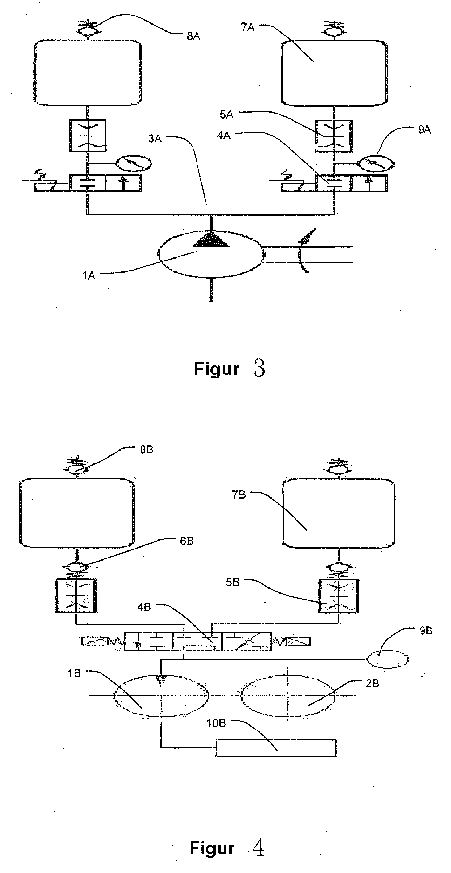

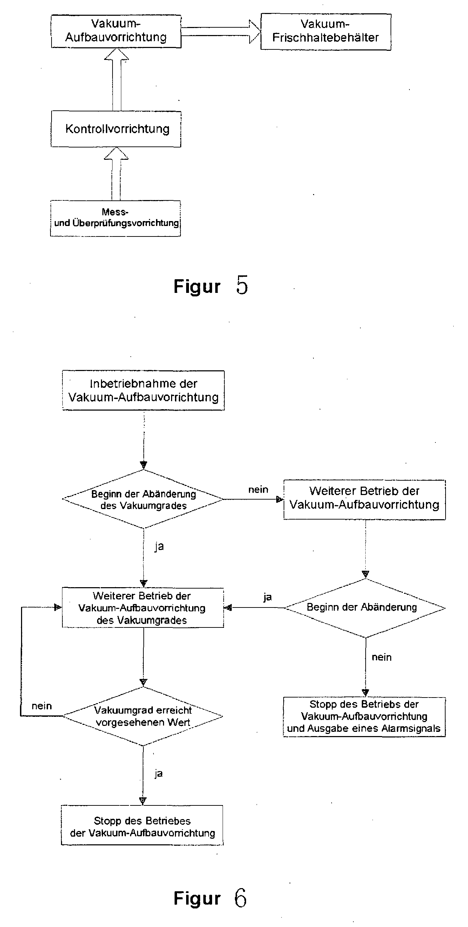

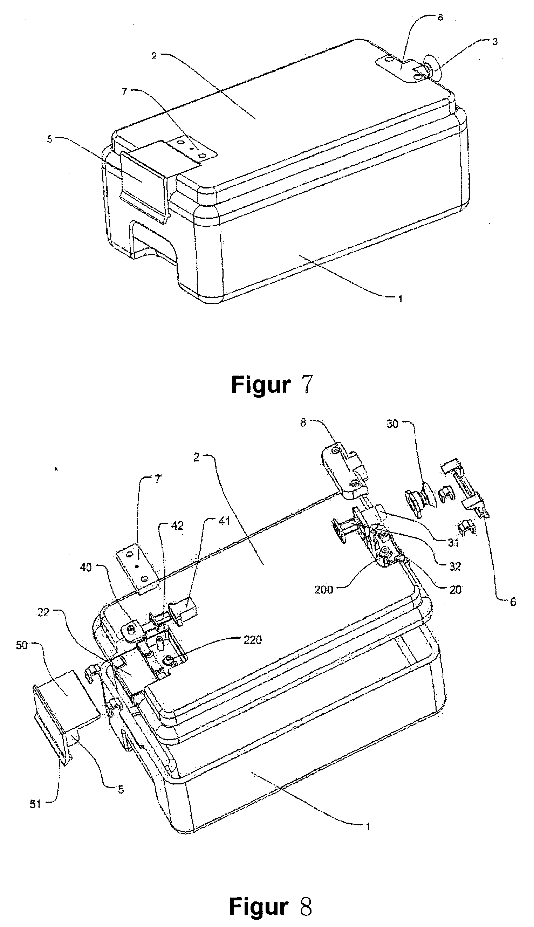

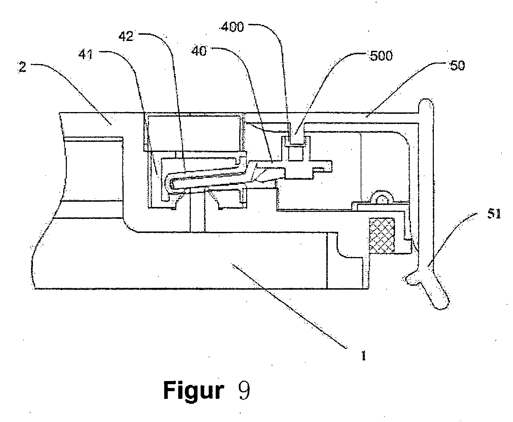

Bei Figur 1 handelt es sich um die Darstellung einer Übersicht eines gegenwärtig vorhandenen elektrischen Kühlschranks mit Vakuum-Frischhaltesystem.
Bei Figur 2 handelt es sich um die Darstellung, einer Übersicht eines anderen gegenwärtig vorhandenen elektrischen Kühlschranks mit Vakuum-Frischhaltesystem.
Bei Figur 3 handelt es sich um die Darstellung einer Übersicht eines Vakuum-Frischhaltesystems für einen elektrischen Kühlschrank gemäß einer praktischen erfindungsgemäßen Ausführungsform.
Bei Figur 4 handelt es sich um die Darstellung einer Übersicht eines Vakuum-Frischhaltesystems für einen elektrischen Kühlschrank gemäß einer anderen praktischen erfindungsgemäßen Ausführungsform.
Bei Figur 5 handelt es sich um die Darstellung der Übersicht des Kontrollverfahrens für einen erfindungsgemäßen elektrischen Kühlschrank mit Vakuum-Frischhaltesystem.
Bei Figur 6 handelt es sich um die Darstellung des Ablaufs des Kontrollverfahrens für einen erfindungsgemäßen elektrischen Kühlschrank mit Vakuum-Frischhaltesystem.
Bei Figur 7 handelt es sich um die dreidimensionale Darstellung des Vakuum-Frischhaltebehälters des Vakuum-Frischhaltesystems eines elektrischen Kühlschranks.
Bei Figur 8 handelt es sich um die dreidimensionale Auflösungsdarstellung des Vakuum-Frischhaltebehälters des Vakuum-Frischhaltesystems eines elektrischen Kühlschranks.
Bei Figur 9 handelt es sich um die Darstellung einer Teilschnittansicht von Luft-Rückschlagventil an Vakuum-Frischhaltebehälter und Handgriff der Figur 7.

### Praktische Ausführungsformen:

Wie aus der Figur 3 ersichtlich ist, erfolgt die Darstellung einer Übersicht eines Vakuum-Frischhaltesystems für einen elektrischen Kühlschrank gemäß einer praktischen erfindungsgemäßen Ausführungsform. Bei dem elektrischen Kühlschrank handelt es sich um einen elektrischen Haushaltskühlschrank mit Kühlung durch einen herkömmlichem Kühlungskreislauf. Der elektrische Kühlschrank weist einen Kühlschrankkörper mit Kühlaufbewahrungskammer und Gefrierkammer auf. Der Kühlschrankkörper ist mit einer Wärmeisolation versehen. Da Kühlschrankkörper, Kühlaufbewahrungskammer und Gefrierkammer zum allgemein bekannten Stand der Technik gehören, bedarf es an dieser Stelle keiner weiteren Erläuterungen in Hinblick auf deren Konstruktion.

Wie aus der Figur 3 ersichtlich ist, weist das erfindungsgemäße Vakuum-Frischhaltesystem eine Vakuumpumpe 1A, einen elektrischen Motor zum Antrieb der vorstehend bezeichneten Vakuumpumpe (nicht in der Figur dargestellt) sowie eine Vakuumaufbauleitung 3A und zwei Zweipositions-Zweiwegeventile 4A auf, welche als Kontrollvorrichtung zum Öffnen und Schließen der Vakuumaufbauleitung 3A dienen. Außerdem wird zwischen Vakuum-Frischhaltebehälter 7A und Vakuumaufbauleitung 3A der Anschluss 5A vorgesehen. An Vakuum-Frischhaltebehälter 7A wird Rückschlagventil 8A vorgesehen, welches als Luftzufuhrvorrichtung dient. Durch den Schalter der Zweipositions-Zweiwegeventile 4A erfolgt die Kontrolle von Öffnen und Schließen der Vakuumaufbauleitung 3A. Nachdem der Vakuumaufbau für den Vakuum-Frischhaltebehälter 7A durchgeführt worden ist, erfolgt durch die Zweipositions-Zweiwegeventile 4A die Druckerhaltung des Vakuum-Frischhaltebehälters. Außerdem wird an Vakuum-Frischhaltebehälter 7A eine Mess- und Überprüfungsvorrichtung 9A vorgesehen, welche die Messung und Überprüfung des Vakuumgrades des Vakuum-Frischhaltesystems durchführt. Hierbei handelt es sich beispielsweise um einen Unterdrucksensor, der als Vakuumsensor eingesetzt wird. Auf diese Weise kann die Messung und Überprüfung des Vakuumgrades des Vakuum-Frischhaltesystems durchgeführt werden.

Wie aus der Figur 4 ersichtlich ist, weist das erfindungsgemäße Vakuum-Frischhaltesystem bei einer anderen praktischen Ausführungsform der vorliegenden Erfindung eine Vakuumpumpe 1B, einen elektrischen Motor 2B zum Antrieb der vorstehend bezeichneten Vakuumpumpe sowie eine Vakuumaufbauleitung 3B und ein Dreipositions-Vierwegeventil 4B auf, welches als Kontrollvorrichtung zum Öffnen und Schließen der Vakuumaufbauleitung 3B dient. Außerdem wird ein Anschluss 5B vorgesehen. An Vakuum-Frischhaltebehälter 7B werden Rückschlagventil 6B, welches als Luftabfuhrvorrichtung dient, und Rückschlagventil 8B, welches als Luftzufuhrvorrichtung dient, vorgesehen. Durch den Schalter des Dreipositions-Vierwegeventils 4B erfolgt die Kontrolle von Öffnen und Schließen der Vakuumaufbauleitung 3B. Nachdem der Vakuumaufbau für den Vakuum-Frischhaltebehälter 7B durchgeführt worden ist, erfolgt durch das Dreipositions-Vierwegeventil 4B die Druckerhaltung des Vakuum-Frischhaltebehälters. Außerdem wird an dem Eingang von Vakuumpumpe 1B eine Mess- und Überprüfungsvorrichtung 9B vorgesehen, welche die Messung und Überprüfung des Vakuumgrades des Vakuum-Frischhaltesystems durchführt. Hierbei handelt es sich beispielsweise um einen kontinuierlichen Unterdrucksensor, der als Vakuumsensor eingesetzt wird.

Wie aus der Figur 5 ersichtlich ist, weist das Kontrollsystem des Vakuum-Frischhaltesystems des erfindungsgemäßen elektrischen Kühlschranks eine Mess- und Überprüfungsvorrichtung, eine Kontrollvorrichtung sowie eine Vakuum-Aufbauvorrichtung auf. Bei der vorstehend bezeichneten Mess- und Überprüfungsvorrichtung kann es sich um eine an Vakuum-Frischhaltebehälter 7A vorgesehene Mess- und Überprüfungsvorrichtung 9A zur Messung und Überprüfung des Vakuumgrades handeln beziehungsweise kann es sich um eine am Eingang der Vakuumpumpe 1B vorgesehene Mess- und Überprüfungsvorrichtung 9B zur Messung und Überprüfung des Vakuumgrades handeln. Die vorstehend bezeichnete Mess- und Überprüfungsvorrichtung weist eine Alarmvorrichtung zur Meldung von nicht ordnungsgemäßen Betriebszuständen des Vakuum-Frischhaltesystems auf. Bei der vorstehend bezeichneten Alarmvorrichtung kann es sich um eine Summpfeife beziehungsweise um eine LED-Anzeigelampe handeln. Die vorstehend bezeichnete Alarmvorrichtung kann außen an der Tür des elektrischen Kühlschranks vorgesehen werden beziehungsweise kann an der Innenwand der Kühlaufbewahrungskammer vorgesehen werden. Die vorstehend bezeichnete Kontrollvorrichtung weist zwei Zweipositions-Zweiwegeventile 4A, welche als Kontrollvorrichtung zum Öffnen und Schließen der Vakuumaufbauleitung 3A dienen, beziehungsweise ein Dreipositions-Vierwegeventil 4B, welches als Kontrollvorrichtung zum Öffnen und Schließen der Vakuumaufbauleitung 3B dient, auf. Außerdem wird an dem Kühlschrankkörper eine Taste zur Inbetriebnahme des Vakuum-Frischhaltesystems vorgesehen. Die vorstehend bezeichnete Taste kann außen an der Tür des elektrischen Kühlschranks vorgesehen werden beziehungsweise kann an der Innenwand der Kühlaufbewahrungskammer vorgesehen werden. Die vorstehend bezeichnete Vakuum-Aufbauvorrichtung weist Vakuumpumpe 1A, 1B, elektrischen Motor 2A, 2B zum Antrieb der vorstehend bezeichneten Vakuumpumpe sowie Vakuumaufbauleitung 3A, 3B und Anschluss 5A, 5B auf.

Wie aus der Figur 6 ersichtlich ist, weist das Verfahren zur Kontrolle des Vakuum-Frischhaltesystems des erfindungsgemäßen Kühlschranks die nachstehend aufgeführten Verfahrensschritte auf:
Verfahrensschritt 1:
   Der Benutzer führt durch Bedienen der Taste des Kontrollsystems die Inbetriebnahme der Vakuum-Aufbauvorrichtung durch und startet auf diese Weise den Vakuumaufbau des Vakuum-Frischhaltebehälters.
Verfahrensschritt 2: Die Mess- und Überprüfungsvorrichtung beginnt mit der Messung und Überprüfung von Abänderungen hinsichtlich des Vakuumgrades des Vakuum-Frischhaltesystems.
Verfahrensschritt 3:
   Wenn die Mess- und Überprüfungsvorrichtung feststellt, dass es hinsichtlich des Vakuumgrades des Vakuum-Frischhaltesystems zu Abänderungen gekommen ist, so sorgt die Kontrollvorrichtung dafür, dass die Vakuum-Aufbauvorrichtung weiter betrieben wird. Die Mess- und Überprüfungsvorrichtung führt weiterhin Messung und Überprüfung hinsichtlich des Vakuumgrades des Vakuum-Frischhaltesystems durch. Wenn das Mess- und Überprüfungsvorrichtung feststellt, dass der vorher festgelegte Wert des Vakuumgrades des Vakuum-Frischhaltesystems erreicht worden ist, so gibt die Kontrollvorrichtung ein Kontrollsignal aus, damit die Vakuum-Aufbauvorrichtung den Betrieb einstellt. Der Vakuumaufbau des Vakuum-Frischhaltesystems ist abgeschlossen.
Verfahrensschritt 4:
   Wenn die Mess- und Überprüfungsvorrichtung feststellt, dass es hinsichtlich des Vakuumgrades des Vakuum-Frischhaltesystems nicht zu Abänderungen gekommen ist, so sorgt die Kontrollvorrichtung dafür, dass die Vakuum-Aufbauvorrichtung weiter über einen vorher festgelegten Zeitraum hinweg betrieben wird (ungefähr zwei Minuten). Wenn die Mess- und Überprüfungsvorrichtung danach feststellt, dass es hinsichtlich des Vakuumgrades des Vakuum-Frischhaltesystem immer noch zu keiner Abänderung gekommen ist, so gibt die Kontrollvorrichtung ein Kontrollsignal aus, damit die Vakuum-Aufbauvorrichtung den Betrieb einstellt. Gleichzeitig erfolgt durch die Alarmvorrichtung die Ausgabe eines Signals über den nicht ordnungsgemäßen Betriebszustand des Vakuum-Frischhaltesystems.

Nachdem das Vakuum für Vakuum-Frischhaltebehälter 1A, 1B des Vakuum-Frischhaltesystems aufgebaut worden ist, kann der Vakuumzustand von Vakuum-Frischhaltebehälter 1A, 1B über einen längeren Zeitraum hinweg aufrecht erhalten werden. Der Benutzer kann manuell den Vakuumzustand des Vakuum-Frischhaltebehälters auflösen. In den Figuren 7 bis 9 erfolgt die Darstellung eines Vakuum-Frischhaltebehälters, welcher auf einfache Art und Weise durch den Benutzer zu öffnen ist.

Wie aus den Figuren 7 bis 9 ersichtlich ist, weist der Vakuum-Frischhaltebehälter einer praktischen Ausführungsform einen Behälterkörper 1, eine Behälterabdeckung 2, einen an einem Ende von Behälterabdeckung 2 vorgesehenen Handgriff 5, ein unterhalb von Handgriff 5 vorgesehenes Luftzufuhr-Rückschlagventil 4, ein an dem anderen entsprechenden Ende von Behälterabdeckung 2 vorgesehenes Verriegelungsteil 6 sowie Luftabfuhr-Rückschlagventil 3 auf. Handgriff 5 und Verriegelungsteil 6 verbinden Behälterkörper 1 und Behälterabdeckung 2 miteinander. Bei der vorliegenden praktischen Ausführungsform handelt es sich bei dem Luftzufuhr-Rückschlagventil 4 um eine Vakuum-Abbauvorrichtung. Durch das vordere Positionierungselement 7 erfolgt die Positionierung in der Ausnehmung 22, welche sich an einem Ende von Behälterabdeckung 2 befindet. Bei Luftabfuhr-Rückschlagventil 3 handelt es sich um die Vakuum-Abbauvorrichtung. Durch das hintere Positionierungselement 8 erfolgt die Positionierung in der Ausnehmung 20, welche sich an dem anderen Ende von Behälterabdeckung 2 befindet. Bei anderen praktischen Ausführungsformen können die Vakuum-Aufbauvorrichtung sowie die Vakuum-Abbauvorrichtung auch andere Elemente oder Schaltvorrichtungen sein. Es ist lediglich erforderlich, dass diese Vorrichtungen in einer vorgegebenen Richtung den Vakuum-Aufbau beziehungsweise den VakuumAbbau des Vakuum-Frischhaltebehälters durchführen können.

Das Luftabfuhr-Rückschlagventil 3 weist Anschlussteil 30, Verbindungsteil 31 sowie Ventil-Innenteil (Küken) 32 auf, wobei Anschlussteil 30 zu dem Anschluss der äußeren Vakuumaufbauleitung passt, während Verbindungsteil 31 zu der in Ausnehmung 20 befindlichen Anschlussöffnung 200 passt und Ventil-Innenteil (Küken) 32 in Verbindungsteil 31 gesteckt wird. Wenn das Ventil - Innenteil (Küken) 32 Druck ausgesetzt wird, öffnet das Luftabfuhr-Rückschlagventil 3 und die in Vakuum-Frischhaltebehälter befindliche Luft wird durch Anschlussöffnung 200 aus der Vakuumaufbauleitung abgeführt. Das hintere Positionierüngselement 8 wird oberhalb von Verbindungsteil 31 vorgesehen. Darauf befinden sich zwei in Abstand vorgesehene Verbindungslöcher. Durch die vorstehend bezeichneten Verbindungslöcher wird das hintere Positionierungselement 8 in der Ausnehmung 20 von Behälterabdeckung 2 befestigt. Ein Ende von Verriegelungsteil 6 wird mit der Ausnehmung 20 verbunden, während das andere Ende an der Kante von Behälterkörper 1 befestigt wird. Auf diese Weise werden Behälterkörper 1 und ein Ende von Behälterabdeckung 2 miteinander verbunden. Durch Kippen des mit Behälterkörper 1 verbundenen Endes von Verriegelungsteil 6 kann das Verrieglungsteil 6 von dem Vakuum-Frischhaltebehälter abgenommen werden.

Das Luftzufuhr-Rückschlagventil 4 weist Auslegerteil 40, Verbindungsteil 41 sowie Ventil-Innenteil (Küken) 42 auf. Bei der Montage wird ein Ende von Auslegerteil 40 in Ventil-Innenteil (Küken) 42 gesteckt. Ventil-Innenteil (Küken) 42 wird wiederum in Verbindungsteil 41 gesteckt. Verbindungsteil 41 passt zu der in Ausnehmung 22 vorgesehenen Anschlussöffnung 220. Das vordere Positionierungselement 7 wird oberhalb von Verbindungsteil 41 vorgesehen. Darauf befinden sich zwei in Abstand vorgesehene Verbindungslöcher. Durch die vorstehend bezeichneten Verbindungslöcher wird das vordere Positionierungselement 7 in der Ausnehmung 22 von Behälterabdeckung 2 befestigt. Der Handgriff 5 wird in beweglicher Art und Weise mit der Kante von Ausnehmung 22 verbunden und kann gegen Behälterabdeckung 2 gedreht werden. Der Handgriff 5 weist ein annähernd rechtwinklig gebogenes Handgriffteil 51 sowie Druckteil 50 auf, wobei Druckteil 50 sich oberhalb von dem Auslegerteil 40 von Luftzufuhr-Rückschlagventil 4 befindet. Die Ausbuchtung 500 von Handgriffteil 51 entspricht der Aussparung 400 an Auslegerteil 40. Das untere Ende von Handgriffteil 51 kann mit der Kante an einem Ende von Behälterkörper 1 abschließen.

Bei Öffnen des Vakuum-Frischhaltebehälters unter Vakuum sorgt ein Kippen des Handgriffteils 51 von Handgriff 5 dafür, dass Handgriff 5 sich um die Kante von Behälterabdeckung 2 dreht. Zu dieser Zeit erfährt das Druckteil 50 Druck und überträgt den Druck über Ausbuchtung 500 an Auslegerteil 40 von Luftzufuhr-Rückschlagventil 4. Das mit Druck versehene Ende von Auslegerteil 40 bewegt sich nach unten und der in Ventil-Innenteil (Küken) 42 befindliche Teil von Auslegerteil 40 bewegt sich nach oben, so dass die durch Ventil-Innenteil (Küken) 42 verschlossene Anschlussöffnung 220 in Ausnehmung 22 geöffnet wird. Die äußere Luft wird durch Anschlussöffnung 220 ins Innere des Vakuum-Frischhaltebehälters geleitet. Somit kann durch Kippen des Handgriffes die Behälterabdeckung 2 von Behälterkörper 1 abgenommen werden.

Ein Vergleich mit dem gegenwärtig vorhandenen Stand der Technik zeigt, dass durch Kippen von Handgriff 5 mit einer Bewegung gleichzeitig Öffnen und Vakuumabbau des Vakuum-Frischhaltebehälters durchgeführt werden können. Dies führt zu einer Vereinfachung der Bedienung und gestaltet die Benutzung praktischer. Außerdem ist das Luftzufuhr-Rückschlagventil 4 verborgen positioniert, so dass das äußere Erscheinungsbild des Vakuum-Frischhaltebehälters optisch ansprechender ist.

Bei der vorliegenden praktischen Ausführungsform werden sowohl Luftabfuhr-Rückschlagventil 3 als auch Luftzufuhr-Rückschlagventil 4 an Behälterabdeckung 2 vorgesehen. Bei anderen Ausführungsformen werden Vakuum-Aufbauvorrichtung und Vakuum-Abbauvorrichtung sämtlich an dem Behälterkörper 1 vorgesehen beziehungsweise eine davon wird an dem Behälterkörper vorgesehen und die andere an der Behälterabdeckung.

## Patentansprüche

1. Elektrischer Kühlschrank mit Vakuum-Frischhaltesystem, welcher einen Kühlschrankkörper mit Kühlaufbewahrungskammer sowie ein innerhalb des Kühlschrankkörpers vorgesehenes Vakuum-Frischhaltesystem aufweist, wobei das vorstehend bezeichnete Vaküum-Frischhaltesystem zumindest einen innerhalb der vorstehend bezeichneten Kühlaufbewahrungskammer vorgesehenen Vakuum-Frischhaltebehälter sowie eine Vakuum-Aufbauvorrichtung zum Aufbau des Vakuums des vorstehend bezeichneten Vakuum-Frischhaltebehälters aufweist, wobei das vorstehend bezeichnete Vakuum-Frischhaltesystem außerdem eine Kontrollvorrichtung zur Kontrolle des Vakuumaufbaus sowie eine Mess- und Überprüfungsvorrichtung zur Messung und Überprüfung des Betriebszustandes des vorstehend bezeichneten Vakuum-Frischhaltesystems aufweist, wobei die vorstehend bezeichnete Mess- und Überprüfungsvorrichtung außerdem eine Alarmvorrichtung für nicht ordnungsgemäße Betriebszustände des vorstehend bezeichneten Vakuum-Frischhaltesystems aufweist, **dadurch gekennzeichnet, dass** im Fall, dass die Mess- und Überprüfungsvorrichtung feststellt, dass es hinsichtlich des Vakuumgrades des Vakuum-Frischhaltesystems nicht zu Abänderungen gekommen ist, die Kontrollvorrichtung dafür sorgt, dass die Vakuum-Aufbauvorrichtung weiter über einen vorher festgelegten Zeitraum hinweg betrieben wird, wobei im Fall, dass die Mess-: und Überprüfungsvorrichtung danach feststellt, dass es hinsichtlich des Vakuumgrades des Vakuum-: Frischhaltesystem immer noch zu keiner Abänderung gekommen ist, die Kontrollvorrichtung ein Kontrollsignal ausgibt, damit die Vakuum-Aufbauvorrichtung den Betrieb einstellt, und wobei gleichzeitig durch die Alarmvorrichtung die Ausgabe eines Signals über den nicht ordnungsgemäßen Betriebszustand des Vakuum-Frischhaltesystems erfolgt.

2. Elektrischer Kühlschrank gemäß Patentanspruch 1,
**dadurch gekennzeichnet, dass** die vorstehend bezeichnete Vakuum-Aufbauvorrichtung Vakuumpumpe, mit der Vakuumpumpe verbundene Vakuumaüfbauleitung sowie an einem Ende der vorstehend bezeichneten Vakuumaufbauleitung vorgesehenen und mit dem vorstehend bezeichneten Vakuum-Frischhaltebehälter verbundenen Anschluss aufweist.

3. Elektrischer Kühlschrank gemäß Patentanspruch 2,
**dadurch gekennzeichnet, dass** die vorstehend bezeichnete Kontrollvorrichtung eine Ventilvorrichtung zum Öffnen und Schließen der vorstehend bezeichneten Vakuumaufbauleitung sowie eine am Kühlschrankkörper vorgesehene Taste zur Inbetriebnahme des vorstehend bezeichneten Vakuum-Frischhaltesystems aufweist.

4. Elektrischer Kühlschrank gemäß Patentanspruch 1,
**dadurch gekennzeichnet, dass** die vorstehend bezeichnete Mess- und Überprüfungsvorrichtung eine in der Kontrollvorrichtung vorgesehene Sensorvorrichtung zur Messung und Überprüfung des Vakuumgrades des vorstehend bezeichneten Vakuum-Frischhaltesystems aufweist.

5. Elektrischer Kühlschrank gemäß Patentanspruch 1 oder 2 oder 3 oder 4, **dadurch gekennzeichnet, dass** der vorstehend bezeichnete Vakuum-Frischhaltebehälter einen Behälterkörper und eine Behälterabdeckung aufweist, wobei an vorstehend bezeichneter Behälterabdeckung ein mit der Vakuum-Aufbauvorrichtung verbundenes Luftventil sowie ein Luftventil für den Vakuumabbauzustand vorgesehen wird.

6. Elektrischer Kühlschrank gemäß Patentanspruch 5, **d**
**adurch gekennzeichnet, dass** der vorstehend bezeichnete Vakuum-Frischhaltebehälter einen Handgriff zum Abheben des Behälterdeckels von dem Behälterkörper aufweist, wobei bei Bedienen des Handgriffs und Öffnen des vorstehend bezeichneten Vakuum-Frischhaltebehälters der vorstehend bezeichnete Handgriff gleichzeitig das vorstehend bezeichnete Luftventil für den Vakuumabbauzustand in Gang setzt.

7. Kontrollverfahren für elektrischen Kühlschrank mit Vakuum-Frischhaltesystem, wobei das vorstehend bezeichnete Vakuum-Frischhaltesystem zumindest einen Vakuum-Frischhaltebehälter sowie eine Vakuum-Aufbauvorrichtung zum Aufbau des Vakuums des vorstehend bezeichneten Vakuum-Frischhaltebehälters aufweist, wobei das vorstehend bezeichnete Kontrollverfahren die nachstehend aufgeführten Verfahrensschritte aufweist:
Bereitstellung einer Kontrollvorrichtung zur Kontrolle des Vakuumaufbaus; Bereitstellung einer Mess- und Überprüfungsvorrichtung zur Messung und Überprüfung des Betriebszustandes des Vakuum-Frischhaltesystems;
Ausgabe eines Befehls der Kontrollvorrichtung zum Start des Vakuumaufbaus des Vakuum-Frischhaltebehälters durch die Vakuum-Aufbauvorrichtüng;
Messung und Überprüfung des Vakuumgrades des Vakuum-Frischhaltesystems durch die Mess- und Überprüfungsvorrichtung;
Entscheidung über den Betriebszustand der Vakuum-Aufbauvorrichtung durch die Kontrollvorrichtung entsprechend den Rückkoppelungssignalen der Mess- und Überprüfüngsvorrichtung, wobei der Verfahrensschritt der Entscheidung über den Betriebszustand der Vakuum-Aufbauvorrichtung durch die Kontrollvorrichtung entsprechend den Rückkoppelungssignalen: der Mess und Überprüfungsvorrichtung die nachstehend aufgeführten Verfahrensunterschritte aufweist:
Wenn nach Betrieb der Vakuum-Aufbauvorrichtung über einen im Voraus festgelegten Zeitabschnitt die Mess- und Uberprüfungsvorrichtung keine Abänderung des Vakuumgrades des Vakuum-Frischhaltesystems feststellt, so stoppt die Kontrollvorrichtung den Betrieb der Vakuum-Aufbauvorrichtung und gibt ein Alarmsignal bei nicht ordnungsgemäßem Betriebszustand des Vakuum-Frischhaltesystems aus;
Wenn nach Betrieb der Vakuum-Aufbauvorrichtung über einen im Voraus festgelegten Zeitabschnitt die Mess- und Überprüfungsvorrichtung eine Abänderung des Vakuumgrades des Vakuum-Frischhaltesystems auf einen im Voraus festgelegten Wert feststellt, so stoppt die Kontrollvorrichtung den Betrieb der Vakuum-Aufbauvorrichtung; **dadurch gekennzeichnet, dass**
im Fall, dass durch die Mess- und Überprüfungsvorrichtung festgestellt wird, dass es hinsichtlich des Vakuumgrades des Vakuum-Frischhaltesystems nicht zu Abänderungen gekommen ist, die Kontrollvorrichtung dafür sorgt, dass die Vakuum-Aufbauvorrichtung weiter über einen vorher festgelegten Zeitraum hinweg betrieben wird, wobei im Fall, dass durch die Mess- und Überprüfungsvorrichtung danach festgestellt wird, dass es hinsichtlich des Vakuumgrades des Vakuum-Frischhaltesystem immer noch zu keiner Abänderung gekommen ist, durch die Kontrollvorrichtung ein Kontrollsignal ausgegeben wird, damit die Vakuum-Aufbauvorrichtung den Betrieb einstellt, und wobei gleichzeitig durch die Alarmvorrichtung die Ausgabe eines Signals über den nicht ordnungsgemäßen Betriebszustand des Vakuum-Frischhaltesystems erfolgt.

8. Kontrollverfahren gemäß Patentanspruch 7, **dadurch gekenntzeichnet, dass** die vorstehend bezeichnete Vakuum-Aufbauvorrichtung Vakuumpumpe, mit der Vakuumpumpe verbundene Vakuumaufbauleitung sowie an einem Ende der vorstehend bezeichneten Vakuumaufbauleitung vorgesehenen und mit dem vorstehend bezeichneten Vakuum-Frischhaltebehälter verbundenen Anschluss aufweist.

9. Kontrollverfahren gemäß Patentanspruch 8, **dadurch gekenntzeichnet, dass** die vorstehend bezeichnete Kontrollvorrichtung eine Ventilvorrichtung zum Öffnen und Schließen der vorstehend bezeichneten Vakuumaufbauleitung sowie eine am Kühlschrankkörper vorgesehene Taste zur Inbetriebnahme des vorstehend bezeichneten Vakuum-. Frischhaltesystems aufweist.

10. Kontrollverfahren gemäß Patentanspruch 9, **dadurch gekennzeichnet, dass** die vorstehend bezeichnete Mess- und Überprüfungsvorrichtung eine in der Kontrollvorrichtung vorgesehene Sensorvorrichtung zur Messung und Überprüfung des Vakuumgrades des vorstehend bezeichneten Vakuum-Frischhaltesystems aufweist.

11. Kontrollverfahren gemäß Patentanspruch 10, **dadurch gekennzeichnet, dass** die vorstehend bezeichnete Mess- und Überprüfungsvorrichtung außerdem eine Alarmvorrichtung für nicht ordnungsgemäße Betriebszustände des vorstehend bezeichneten Vakuum-Frischhaltesystems aufweist.

## Claims

1. Electric refrigerator with vacuum preservation system, which electric refrigerator has a refrigerator body with refrigeration compartment and a vacuum preservation system provided inside the refrigerator body, wherein the aforesaid vacuum preservation system has at least one vacuum preservation container provided inside the aforesaid refrigeration compartment as well as a vacuum generation device for building up the vacuum in the aforesaid vacuum preservation container, wherein the aforesaid vacuum preservation system also has a control device for controlling the buildup in the vacuum and a measuring and monitoring device for measuring and monitoring the operating state of the aforesaid vacuum preservation system, wherein the aforesaid measuring and monitoring device also has an alarm device for signaling incorrect operating states of the aforesaid vacuum preservation system, **characterised in that** in the event that the measuring and monitoring device establishes that changes have not taken place with regard to the vacuum level of the vacuum preservation system, the control device ensures that the vacuum generation device continues in operation for a predetermined period of time, wherein in the event that the measuring and monitoring device then determines that still no change has taken place with regard to the vacuum level of the vacuum preservation system, the control device outputs a control signal so that the vacuum generation device will cease operation, and wherein at the same time a signal is output by the alarm device indicating that the vacuum preservation system is not in the correct operating state.

2. Electric refrigerator according to claim 1, **characterised in that** the aforesaid vacuum generation device has a vacuum pump, a vacuum generation line connected to the vacuum pump and an adapter provided at one end of the aforesaid vacuum generation line and connected to the aforesaid vacuum preservation container.

3. Electric refrigerator according to claim 2, **characterised in that** the aforesaid control device has a valve device for opening and closing the aforesaid vacuum generation line as well as a key provided on the refrigerator body for the purpose of starting up the aforesaid vacuum preservation system.

4. Electric refrigerator according to claim 1, **characterised in that** the aforesaid measuring and monitoring device has a sensor device provided in the control device for the purpose of measuring and monitoring the vacuum level of the aforesaid vacuum preservation system.

5. Electric refrigerator according to claim 1 or 2 or 3 or 4, **characterised in that** the aforesaid vacuum preservation container has a container body and a container cover, an air valve connected to the vacuum generation device and an air valve for the vacuum elimination state being provided on the aforesaid container cover.

6. Electric refrigerator according to claim 5, **characterised in that** the aforesaid vacuum preservation container has a handle for lifting off the container cover from the container body, wherein when the handle is operated and the aforesaid vacuum preservation container is opened, the aforesaid handle simultaneously puts the aforesaid air valve for the vacuum elimination state into operation.

7. Control method for an electric refrigerator with vacuum preservation system, the aforesaid vacuum preservation system having at least one vacuum preservation container as well as a vacuum generation device for building up the vacuum in the aforesaid vacuum preservation container, wherein the aforesaid control method has the method steps listed below:
Providing a control device for controlling the vacuum buildup;
providing a measuring and monitoring device for measuring and monitoring the operating state of the vacuum preservation system;
outputting a command of the control device in order to start the vacuum buildup in the vacuum preservation container by means of the vacuum generation device;
measuring and monitoring the vacuum level of the vacuum preservation system by means of the measuring and monitoring device;
deciding on the operating state of the vacuum generation device by the control device according to the feedback signals of the measuring and monitoring device, wherein the method step of the control device's deciding on the operating state of the vacuum generation device according to the feedback signals of the measuring and monitoring device has the method steps listed below:
If, after the vacuum generation device has been in operation for a predetermined length of time, the measuring and monitoring device detects no change in the vacuum level of the vacuum preservation system, the control device stops the operation of the vacuum generation device and outputs an alarm signal in the event that the vacuum preservation system is not in the correct operating state;
If, after the vacuum generation device has been in operation for a predetermined length of time, the measuring and monitoring device detects a change in the vacuum level of the vacuum preservation system, the control device stops the operation of the vacuum generation device; **characterised in that** in the event that the measuring and monitoring device establishes that changes have not taken place with regard to the vacuum level of the vacuum preservation system, the control device ensures that the vacuum generation device continues in operation for a predetermined period of time, wherein in the event that the measuring and monitoring device then determines that still no change has taken place with regard to the vacuum level of the vacuum preservation system, the control device outputs a control signal so that the vacuum generation device will cease operation,
and wherein at the same time a signal is output by the alarm device indicating that the vacuum preservation system is not in the correct operating state.

8. Control method according to claim 7, **characterised in that** the aforesaid vacuum generation device has a vacuum pump, a vacuum generation line connected to the vacuum pump, and an adapter provided at one end of the aforesaid vacuum generation line and connected to the aforesaid vacuum preservation container.

9. Control method according to claim 8, **characterised in that** the aforesaid control device has a valve device for opening and closing the aforesaid vacuum generation line as well as a key provided on the refrigerator body for the purpose of starting up the aforesaid vacuum preservation system.

10. Control method according to claim 9, **characterised in that** the aforesaid measuring and monitoring device has a sensor device provided in the control device for the purpose of measuring and monitoring the vacuum level of the aforesaid vacuum preservation system.

11. Control method according to claim 10, **characterised in that** the aforesaid measuring and monitoring device also has an alarm device for signaling incorrect operating states of the aforesaid vacuum preservation system.

## Revendications

1. Réfrigérateur électrique avec système de conservation sous vide, lequel réfrigérateur présente un corps de réfrigérateur muni d'une chambre de conservation réfrigérée ainsi qu'un système de conservation sous vide ménagé à l'intérieur du corps de réfrigérateur, ledit système de conservation sous vide présentant au moins un récipient de conservation sous vide ménagé à l'intérieur de ladite chambre de conservation réfrigérée ainsi qu'un dispositif de formation de vide destiné à former le vide du dit récipient de conservation sous vide, ledit système de conservation sous vide présentant en outre un dispositif de contrôle destiné à contrôler la formation de vide ainsi qu'un dispositif de mesure et de vérification destiné à mesurer et vérifier l'état de fonctionnement du dit système de conservation sous vide, ledit dispositif de mesure et de vérification présentant en outre un dispositif d'alarme pour des états de fonctionnement non corrects du dit système de conservation sous vide, **caractérisé en ce qu'**au cas où le dispositif de mesure et de vérification constate qu'il n'y a pas eu de modifications au regard du degré de vide du système de conservation sous vide, le dispositif de contrôle assure que le dispositif de formation de vide continue de fonctionner au-delà d'une période de temps déterminée au préalable, **en ce qu'**au cas où le dispositif de mesure et de vérification constate ensuite qu'il n'y a toujours pas eu de modifications au regard du degré de vide du système de conservation sous vide, le dispositif de contrôle sort un signal de contrôle afin que le dispositif de formation de vide arrête de fonctionner, et la sortie d'un signal indiquant l'état de fonctionnement non correct du système de conservation sous vide étant simultanément réalisée par le dispositif d'alarme.

2. Réfrigérateur électrique selon la revendication 1, **caractérisé en ce que** ledit dispositif de formation de vide présente une pompe à vide, une conduite de formation de vide raccordée à la pompe à vide ainsi qu'un raccord ménagé à une extrémité de ladite conduite de formation de vide et raccordé au dit récipient de conservation sous vide.

3. Réfrigérateur électrique selon la revendication 2, **caractérisé en ce que** ledit dispositif de contrôle présente un dispositif de soupape destiné à ouvrir et fermer ladite conduite de formation de vide ainsi qu'une touche ménagée sur le corps de réfrigérateur, destinée à la mise en marche du dit système de conservation sous vide.

4. Réfrigérateur électrique selon la revendication 1, **caractérisé en ce que** ledit dispositif de mesure et de vérification présente un dispositif de détection ménagé dans le dispositif de contrôle, destiné à mesurer et vérifier le degré de vide du dit système de conservation sous vide.

5. Réfrigérateur électrique selon la revendication 1 ou 2 ou 3 ou 4, **caractérisé en ce que** ledit récipient de conservation sous vide présente un corps de récipient et un couvercle de récipient, une soupape à air raccordée au dispositif de formation de vide ainsi qu'une soupape à air pour l'état de décharge de vide étant ménagées sur ledit couvercle de récipient.

6. Réfrigérateur électrique selon la revendication 5, **caractérisé en ce que** ledit récipient de conservation sous vide présente une poignée destinée à soulever le couvercle de récipient du corps de récipient, ladite poignée, lors de la commande de la poignée et de l'ouverture du dit récipient de conservation sous vide, mettant en marche ladite soupape à air pour l'état de décharge de vide.

7. Procédé de contrôle pour réfrigérateur électrique comprenant un système de conservation sous vide, ledit système de conservation sous vide présentant au moins un récipient de conservation sous vide ainsi qu'un dispositif de formation de vide destiné à former le vide du dit récipient de conservation sous vide, ledit procédé de contrôle présentant les étapes de procédé mentionnées ci-dessous :
fourniture d'un dispositif de contrôle destiné à contrôler la formation de vide ;
fourniture d'un dispositif de mesure et de vérification destiné à mesurer et vérifier l'état de fonctionnement du système de conservation sous vide ;
sortie d'une instruction du dispositif de contrôle pour le départ de la formation de vide du récipient de conservation sous vide au moyen du dispositif de formation de vide ;
mesure et vérification du degré de vide du système de conservation sous vide par le dispositif de mesure et de vérification;
décision sur l'état de fonctionnement du dispositif de formation de vide par le dispositif de contrôle, conformément aux signaux de rétroaction du dispositif de mesure et de vérification, l'étape de procédé de la décision de l'état de fonctionnement du dispositif de formation de vide par le dispositif de contrôle conformément aux signaux de rétroaction du dispositif de mesure et de vérification présentant les sous-étapes de procédé mentionnées ci-dessous :
si, après le fonctionnement du dispositif de formation de vide pendant une période de temps déterminée au préalable, le dispositif de mesure et de vérification ne constate aucune modification du degré de vide, le dispositif de contrôle arrête alors le fonctionnement du dispositif de formation de vide et sort un signal d'alarme en cas d'état de fonctionnement non correct du système de conservation sous vide ;
si, après le fonctionnement du dispositif de formation de vide pendant une période de temps déterminée au préalable, le dispositif de mesure et de vérification constate une modification du degré de vide avec obtention d'une valeur déterminée au préalable, le dispositif de contrôle arrête le fonctionnement du dispositif de formation de vide ;
**caractérisé en ce qu'**
au cas où il est constaté par le dispositif de mesure et de vérification qu'il n'y a pas eu de modifications au regard du degré de vide du système de conservation sous vide, le dispositif de contrôle assure que le dispositif de formation de vide continue de fonctionner au-delà d'une période de temps déterminée au préalable, **en ce qu'**au cas où il est constaté ensuite par le dispositif de mesure et de vérification qu'il n'y a toujours pas eu de modifications au regard du degré de vide du système de conservation sous vide, un signal de contrôle est sorti par le dispositif de contrôle afin que le dispositif de formation de vide arrête de fonctionner, et la sortie d'un signal indiquant l'état de fonctionnement non correct du système de conservation sous vide étant simultanément réalisée par le dispositif d'alarme.

8. Procédé de contrôle selon la revendication 7, **caractérisé en ce que** ledit dispositif de formation de vide présente une pompe à vide, une conduite de formation de vide raccordée à la pompe à vide ainsi qu'un raccord ménagé à une extrémité de ladite conduite de formation de vide et raccordé au dit récipient de conservation sous vide.

9. Procédé de contrôle selon la revendication 8, **caractérisé en ce que** ledit dispositif de contrôle présente un dispositif de soupape destiné à ouvrir et fermer ladite conduite de formation de vide ainsi qu'une touche ménagée sur le corps de réfrigérateur, destinée à la mise en marche du dit système de conservation sous vide.

10. Procédé de contrôle selon la revendication 9, **caractérisé en ce que** ledit dispositif de mesure et de vérification présente un dispositif de détection ménagé dans le dispositif de contrôle, destiné à mesurer et vérifier le degré de vide du dit système de conservation sous vide.

11. Procédé de contrôle selon la revendication 10, **caractérisé en ce que** ledit dispositif de mesure et de vérification présente en outre un dispositif d'alarme pour des états de fonctionnement non corrects du dit système de conservation sous vide.
